# EUROPÄISCHE PATENTSCHRIFT

(11) **EP 0 867 154 B1**
(45) Veröffentlichungstag und Bekanntmachung des Hinweises auf die Patenterteilung: **02.01.2003**
(21) Anmeldenummer: 97810188.9
(22) Anmeldetag: 27.03.1997
(51) Int. Cl.: A61C 13/265

(54) **Vorrichtung zur abnehmbaren Befestigung von Zahnprothesen**
Device for releasably mounting dental prosthesis
Dispositif d'attachement amovible de prothèses dentaires

(43) Veröffentlichungstag der Anmeldung: 30.09.1998
(73) Patentinhaber: CENDRES ET METAUX S.A., CH-2501 Bienne (CH)
(72) Erfinder: Blümli, Markus, CH-2501 Biel (CH); Buchholz, Alexis, CH-2501 Biel (CH); Guenat, Jean Marc, CH 2501 Biel (CH)
(74) Vertreter: AMMANN PATENTANWAELTE AG BERN

(56) Entgegenhaltungen:
- EP-A- 0 298 286
- EP-A- 0 387 428
- DE-A- 3 706 816

## Beschreibung

Die vorliegende Erfindung bezieht sich auf eine Vorrichtung zur Befestigung von Zahnprothesen gemäss Oberbegriff von Patentanspruch 1.

Eine solche Vorrichtung kann der DE-C-3 740 644 entnommen werden, in der ein Verfahren zum Herstellen eines Patrizen-Wurzelstifts offenbart wird, wobei der Wurzelstift einen Kopfabschnitt mit einem umlaufenden Wulst enthält, auf den eine Matrize, die mit einem als O-Ring ausgebildeten federnden Element versehen ist, abnehmbar befestigt werden kann. Statt eines O-Rings ist es auch bekannt, ein Federelement aus Metall zu verwenden.

Während die Verwendung eines Metallfederelementes im Hinblick auf die Hygiene problematisch ist und zu einer relativ aufwendigen Herstellung führt, ist die Verwendung eines O-Rings als Retentionselement höchst unpräzise, da ohne besondere Vorkehrungen ein zu grosses axiales Spiel vorhanden ist.

Es ist von diesem Stand der Technik ausgehend Aufgabe der vorliegenden Erfindung, eine Befestigungsvorrichtung anzugeben, die einerseits eine gute Befestigung und Abdichtung ermöglicht und andererseits eine kostengünstige Produktion erlaubt. Eine solche Vorrichtung ist in Patentanspruch 1 definiert. Dokument EP-A-0 387 428 offenbart eine solche Vorrichtung, wie sie auch im Oberbegriff des Anspruchs 1 definiert ist.

Im folgenden wird die Erfindung anhand einer Zeichnung eines Ausführungsbeispiels näher erläutert:
- Figur 1: zeigt, teilweise geschnitten, die erfindungsgemässe Befestigungsvorrichtung,
- Figur 2: zeigt den Retentionsring von Figur 1 in perspektivischer Sicht, und
- Figur 3: zeigt in perspektivischer Sicht die Oberfläche der Matrize gemäss Figur 1.

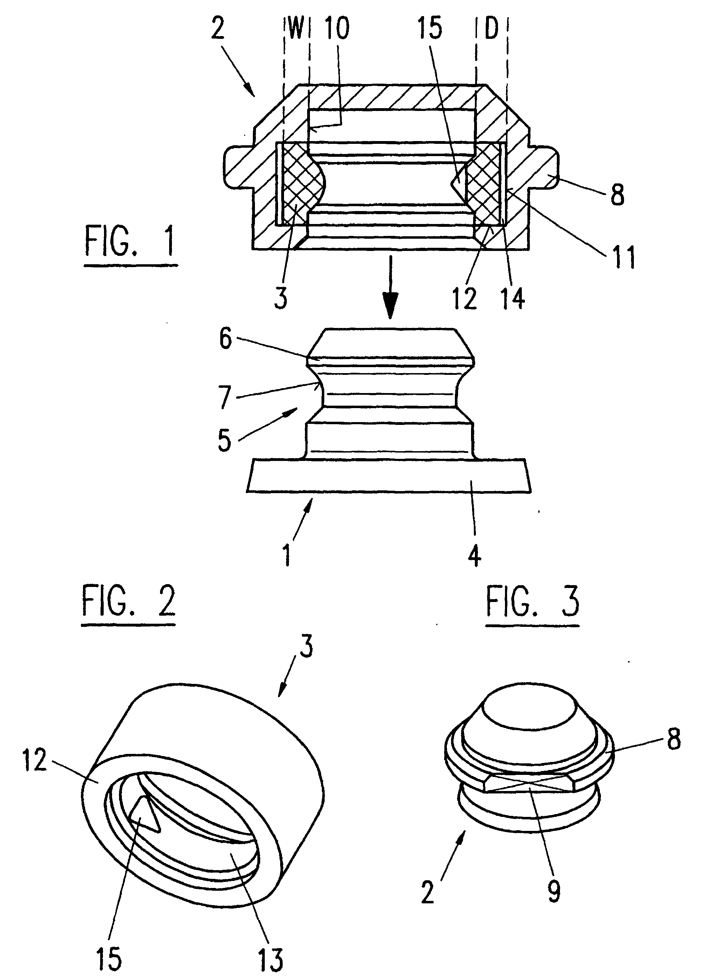

In Figur 1 erkennt man die drei hauptsächlichen Elemente, die Patrize 1, die Matrize 2 und den Retentionsring 3. Die Patrize 1 besitzt einen Verankerungsflansch 4, zum Angiessen oder Auflöten auf Wurzelstiftkappen oder dgl. Verankerungselemente und ein Retentionsteil 5 mit Retentionswulst 6 und einer umlaufenden Retentionsnut 7. Die Patrize wird vorzugsweise aus einer palladium- und kupferfreien angussfähigen Edelmetalllegierung gefertigt, kann aber selbstverständlich auch aus anderen Legierungen gefertigt werden, da die Metallbeschaffenheit für die Funktion der Befestigung allein nicht entscheidend ist.

Die Matrize wird vorzugsweise einteilig aus Titan gefertigt, kann jedoch selbstverständlich auch aus jeder anderen Dental-Legierung gefertigt werden. Die Matrize 2 hat im wesentlichen die Form einer ganz geschlossenen Kappe mit einem umlaufenden Rand 8, der, siehe Figur 3, mindestens eine Abflachung 9 aufweist. Dieser Rand 8 dient dem Rückhalt des um die Matrize polymerisierten Prothesenkörpers, wobei die Abflachung seine Rotationssicherung gewährleistet. Die Innenwand 10 der Matrize weist eine umlaufende Nut 11 auf, die der Aufnahme des Retentionsringes 3 dient.

Der Retentionsring 3 ist aus einem gummielastischen Material gefertigt, vorzugsweise aus einem bioverträglichen, mundbeständigen Nitrilkautschuk, wobei ein derartiger Kunststoff gewählt wird, dass einerseits eine hinreichende Retention und andererseits eine gute Abdichtung des Matrizeninneren gewährleistet wird, um das Eindringen von Speichel, Speiseresten usw. und eine Verkalkung zu verhindern.

Gemäss Figur 1 besitzt der Retentionsring 3 im Querschnitt ein rechteckiges Profil 12, auf dem ein halbkreisförmiger Wulst 13 aufgesetzt ist, dessen Aussenform etwa dem Profil der Nut 7 an der Patrize entspricht. Wie aus Figur 1 ferner hervorgeht, ist die Nuttiefe D der umlaufenden Nut etwas grösser als die Dicke W des rechteckigen Profils des Retentionsringes, so dass ein Spalt 14 zwischen der Ringwand und dem Nutgrund vorhanden ist. Dieser Spalt gewährleistet eine geringfügige Expansion des Retentionsringes beim Einoder Ausführen des Wulstes 6 an der Patrize und erzeugt damit eine Retentionskraft, die ein sanftes Aufsetzen oder Abnehmen der Matrize und somit der Zahnprothese ermöglicht.

Versuche haben gezeigt, dass ein funktionsfähiges Aufsetzen der Matrize auf die Patrize ohne weitere Massnahmen nicht immer gewährleistet ist, da beim Aufsetzen die in der Matrize sich befindliche Luft komprimiert wird. Vor allem aber entsteht beim Abnehmen ein Vakuum mit grosser Rückhaltekraft, zu dessen Ueberwindung ein zu grosser Kraftaufwand notwendig ist. Es ist daher zweckmässig, den Wulst 13 des Retentionsringes 3 mit einer Entlüftungsnut 15 zu versehen. Dadurch kann der sich bildende Ueberdruck beim Aufsetzen und das Vakuum beim Abziehen nicht entstehen, so dass sowohl ein sanftes Einschnappen als auch ein Entfernen ohne übermässigen Kraftaufwand gewährleistet wird.

Wie aus obiger Beschreibung im Zusammenhang mit Figur 1 hervorgeht, ist der Retentionsring 3 mit seinem rechteckigen Profilteil 12 vollständig in der Nut 11 in der Matrize gehalten, so dass weder beim Einschieben noch bei der Benutzung der Prothese eine axiale Verschiebung des Retentionsringes erfolgt. Falls noch eine optimale Abstimmung des umlaufenden Wulstes 13 am Retentionsring 3 mit der Retentionsnut 7 erfolgt, was technisch einfach zu bewerkstelligen ist, ist eine vollständig sichere, praktisch spielfreie Befestigung der Prothese gewährleistet. Ausserdem wird durch die Entlüftungsnut ein benutzerfreundliches Abnehmen der Prothese gewährleistet. Es ist vom Funktionenbeschrieb her ersichtlich, dass die Ausbildung der Entlüftungsnut nicht die gleiche sein muss wie in der Zeichnung dargestellt und jede geeignete Form aufweisen kann.

## Patentansprüche

1. Vorrichtung zur Befestigung von Zahnprothesen, mit einer im Kiefer verankerbaren Patrize und einer abnehmbar daran befestigbaren Matrize zur Aufnahme eines Aufbaus, wobei die Patrize (1) eine Retentionsnut und die Matrize (2) einen die Patrize an der Nut zurückhaltenden, federnden gummielastischen Retentionsring (3) aufweist, der in der Matrize (2) derart angeordnet ist, dass er in axialer Richtung unverschiebbar und beim Ein- oder Ausschieben der Patrize (1) unverdrillbar gehalten ist, **dadurch gekennzeichnet, dass** die Innenwand des Retentionrings eine Entlüftungsnut (15) aufweist.

2. Vorrichtung nach Anspruch 1, **dadurch gekennzeichnet, dass** der Retentionsring (3) aus Kunststoff, vorzugsweise Nitrilkautschuk, gefertigt ist.

3. Vorrichtung nach Anspruch 1 oder 2, **dadurch gekennzeichnet, dass** der Retentionsring (3) im Querschnitt ein rechteckiges Profil (12) mit einem aufgesetzten Wulst (13) aufweist, wobei der Teil des Ringes mit dem rechteckigen Profil (12) zwecks Vermeidung eines axialen Spiels ganz in einer umlaufenden Nut (11) in der Innenwand der Matrize (2) eingefasst ist und die Nuttiefe (D) etwas grösser ist als die Dicke (W) des rechteckigen Profils (12).

4. Vorrichtung nach einem der Ansprüche 1 bis 3, **dadurch gekennzeichnet, dass** die Matrize (2) einen umlaufenden Rand (8) mit mindestens einer Abflachung (9) aufweist.

5. Vorrichtung nach einem der Ansprüche 1 bis 4, **dadurch gekennzeichnet, dass** die Matrize (2) aus Titan gefertigt ist.

## Claims

1. Device for the attachment of dental replacements, comprising a male part that can be anchored in the jaw and a removably attachable female part for receiving a suprastructure, the male part (1) comprising a retention groove and the female part (2) comprising a resilient rubber-elastic retention ring (3) that retains the male part by the groove and is arranged in the female part (2) in such a manner that it is secured in the axial direction and rotationally secured during the insertion and the extraction of the male part (1), **characterised in that** the inner wall of the retention ring comprises a venting groove (15).

2. Device according to claim 1, **characterised in that** the retention ring (3) is made of a synthetic material, preferably of nitrile rubber.

3. Device according to claim 1 or 2, **characterised in that** the cross-section of the retention ring (3) has a rectangular profile (12) with a bead (13) apposed thereon, the part of the ring having the rectangular profile (12) being completely enclosed in a circular groove (11) in the inner wall of the female part (2) in order to avoid any axial clearance, and the depth (D) of the groove being slightly greater than the thickness (W) of the rectangular profile (12).

4. Device according to one of claims 1 to 3, **characterised in that** the female part (2) comprises a circular rim (8) including at least one flattened portion (9).

5. Device according to one of claims 1 to 4, **characterised in that** the female part (2) is made of titanium.

## Revendications

1. Dispositif de fixation de prothèses dentaires, comprenant une partie mâle capable d'être ancrée dans le maxillaire et une partie femelle capable d'y être attachée et destinée à être munie d'une suprastructure, la partie mâle (1) présentant une rainure de rétention et la partie femelle (2) présentant un anneau de rétention (3) en caoutchouc élastique retenant la partie mâle par l'intermédiaire de ladite rainure et disposé dans la partie mâle (2) de manière à être fixée en direction axiale, et fixée en rotation pendant l'engagement et le dégagement de la partie mâle (1), **caractérisé en ce que** la paroi intérieure de l'anneau de rétention présente une rainure d'aération (15).

2. Dispositif selon la revendication 1, **caractérisé en ce que** l'anneau de rétention (3) est fabriqué en matière synthétique, préférablement en caoutchouc nitrile.

3. Dispositif selon la revendication 1 ou 2, **caractérisé en ce que** l'anneau de rétention (3) présente une coupe transversale de profil (12) rectangulaire avec un bourrelet (13) apposé, la partie à profil (12) rectangulaire de l'anneau étant entièrement entourée par une rainure circulaire (11) dans la paroi intérieure de la partie femelle (2) afin d'éviter tout jeu axial, et la profondeur (D) de la rainure étant un peu plus grande que l'épaisseur dudit profil (12) rectangulaire.

4. Dispositif selon l'une des revendications 1 à 3, **caractérisé en ce que** la partie femelle (2) comporte un bord circulaire (8) présentant au moins un méplat (9).

5. Dispositif selon l'une des revendications 1 à 4, **caractérisé en ce que** la partie femelle (2) est fabriquée en titane.
